# EUROPÄISCHE PATENTANMELDUNG

(11) **EP 1 404 025 A1**
(43) Veröffentlichungstag der Anmeldung: **31.03.2004**
(21) Anmeldenummer: 02360275.8
(22) Anmeldetag: 26.09.2002
(51) Int. Cl.: H04B 1/08, B60R 11/02

(54) **Audiosystem, Mobilfunkeinrichtung, Audioeinrichtung und Frontblende**

(71) Anmelder: ALCATEL, 75008 Paris (FR)
(72) Erfinder: Dillenburger, Martin, Dipl.-Ing., 71723 Grossbottwar (DE)
(74) Vertreter: Wörz, Volker

(57) **Zusammenfassung**

Die Erfindung betrifft ein bekanntes Audiosystem (100) sowie die darin grundsätzlich zusammenwirkenden Komponenten, wie eine Mobilfunkeinrichtung (10), eine Audioeinrichtung, insbesondere ein Radio, und eine Frontblende (20) für die Audioeinrichtung. Aufgabe der Erfindung ist es, ein derartiges Audiosystem (100) und dessen Komponenten dahingehend weiterzubilden, dass die Mobilfunkeinrichtung (10) auch unabhängig von dem Audiosystem (100) betreibbar ist. Erfindungsgemäß wird diese Aufgabe dadurch gelöst, dass die Mobilfunkeinrichtung (10) zusammen mit der Anzeigeeinrichtung und/oder den Bedienelementen aus dem Audiosystem entnehmbar ist. Die Anschaffung einer zusätzlichen Mobilfunkeinrichtung, insbesondere eines Mobiltelefons, um unabhängig von dem Audiosystem mobil kommunizieren zukönnen, ist somit entbehrlich. (Figur 1)

## Beschreibung

Die Erfindung betrifft ein Audiosystem, vorzugsweise zum Einbau in ein Fahrzeug, eine Mobilfunkeinrichtung, eine Audioeinrichtung, insbesondere ein Radio, und eine Frontblende für die Audioeinrichtung gemäß den Oberbegriffen der Patentansprüche 1, 10, 14 und 20.

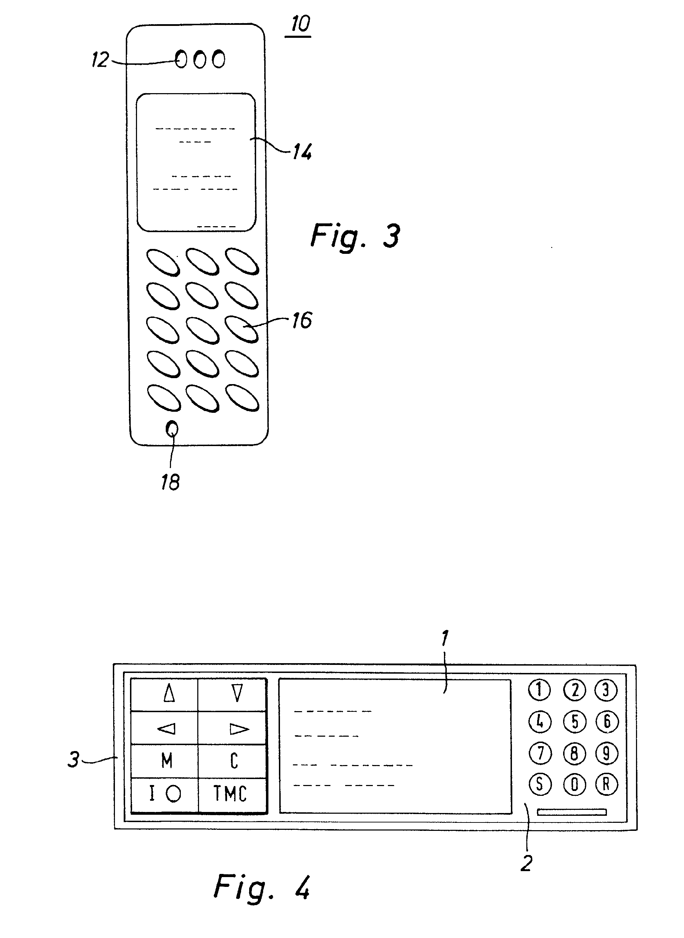

Ein derartiges Audiosystem ist im Stand der Technik grundsätzlich bekannt. Beispielsweise ist aus der DE 199 49 821 A1 ein in Fig. 4 gezeigtes Autoradio mit einer Einrichtung zum Empfangen von digitalen Zusatzinformationen, zum Umwandeln der digitalen Zusatzinformationen in Sprachinformationen und zum Wiedergeben der Sprachinformationen bekannt. Die Einrichtung umfaßt einen Sprachspeicher zum Abspeichern von Wörtern in einer bestimmten Landessprache für die Umwandlung der digitalen Zusatzinformationen. Der Sprachspeicher ist von außen zugänglich an dem Autoradio angeordnet und auswechselbar. Die Einrichtung selber ist allerdings fest, d.h. nicht auswechselbar in das Autoradio integriert. Das Autoradio weist eine Frontblende, Fig. 4: 3, Bedienelemente 2 zur Bedienung des Autoradios und der Einrichtung sowie ein Anzeigefeld 1 auf.

Weiterhin sind Autoradios, z.B. das Autoradio "Becker Traffic Pro Online 7800" der Firma Becker bekannt, in welche eine Mobilfunkeinrichtung fest eingebaut ist, siehe im Internet: http://www.car-hifi4you.de. Bei dem genannten Autoradio ist zwar die Frontblende mit einer Anzeigeeinrichtung und Bedienelementen abnehmbar gestaltet, nicht aber die Mobilfunkeinrichtung.

Dies hat den Nachteil, dass die Mobilfunkeinrichtung nicht separat von dem Autoradio benutzt werden kann; eine mobile Kommunikation von außerhalb des Autos, ohne das Bestehen einer elektrischen Verbindung zu dem Autoradio, ist dann nur mit einer zusätzlichen Mobilfunkeinrichtung möglich.

Ausgehend von diesem Stand der Technik ist es die Aufgabe der Erfindung, ein bekanntes Audiosystem, sowie die darin grundsätzlich zusammenwirkenden Komponenten, wie eine bekannte Mobilfunkeinrichtung, eine bekannte Audioeinrichtung und eine bekannte Frontblende derart weiterzubilden, dass die Mobilfunkeinrichtung auch unabhängig von dem Audiosystem betreibbar ist.

Diese Aufgabe wird durch den Gegenstand des Patentanspruchs 1 gelöst. Demnach besteht die Lösung insbesondere darin, dass die Mobilfunkeinrichtung (10) zusammen mit der Anzeigeeinrichtung und/oder den Bedienelementen aus dem Audiosystem entnehmbar ist.

Unter dem Begriff Audiosystem ist in der gesamten Beschreibung, inklusive der Ansprüche, eine Kombination bestehend aus einer Audioeinrichtung und einer Mobilfunkeinrichtung zu verstehen. Demgegenüber bezeichnet der Begriff Audioeinrichtung eine beliebige Einrichtung für eine akustische Wiedergabe, z.B. einen CD-Player etc., insbesondere jedoch ein Radio. Unter den Begriff Audioeinrichtung fallen aber auch Kombinationsgeräte, wie z.B. ein Radio mit integriertem Kassettenrecorder oder CD-Player. Der Begriff Mobilfunkeinrichtung bezeichnet insbesondere ein Mobiltelefon.

Durch ihre Entnehmbarkeit aus dem Audiosystem ist die Mobilfunkeinrichtung auch unabhängig von dem Audiosystem verwendbar. Die Anschaffung einer zusätzlichen Mobilfunkeinrichtung, insbesondere eines Mobiltelefons, um unabhängig von dem Audiosystem mobil kommunizieren zu können, ist somit entbehrlich.

Gemäß einem bevorzugten Ausführungsbeispiel der Erfindung können bei Vorsehen einer Verwendung der Anzeigeeinrichtung und der Bedienelemente der als Mobiltelefon ausgebildeten Mobilfunkeinrichtung zur Bedienung der Audioeinrichtung zumindest einzelne Bedienelemente des Audiosystems zur Bedienung der Audioeinrichtung eingespart werden.

Weiterhin ist die Audioeinrichtung vorzugsweise automatisch deaktiviert, sobald die elektrische Verbindung zwischen der Mobilfunkeinrichtung und der Audioeinrichtung unterbrochen ist. Durch einfaches Mitnehmen der Mobilfunkeinrichtung, insbesondere des Mobiltelefons, bei Entfernung von dem Audiosystem bzw. beim Verlassen des Fahrzeugs in welches das Audiosystem eingebaut ist, kann ein praktikabler und sehr wirkungsvoller Diebstahlschutz realisiert werden.

Vorzugsweise ist in der Frontblende der Audioeinrichtung und erforderlichenfalls auch in der Audioeinrichtung selber eine Öffnung zur Aufnahme der Mobilfunkeinrichtung, insbesondere des Mobiltelefons vorgesehen. Dort hat die Mobilfunkeinrichtung ihren festen Platz; eine separate Halterung für die Mobilfunkeinrichtung ist damit entbehrlich.

Vorteilhaft ist es auch, wenn das Fehlen der Mobilfunkeinrichtung in den Öffnungen der Frontblende oder der Audioeinrichtung optisch angezeigt wird. Durch die optische Anzeige können potentielle Autoradio-Diebe abgeschreckt werden. Zusätzlich kann eine kurzzeitig beim Abschalten des Fahrzeugmotors, beim Abziehen eines Zündschlüssels, beim Herausziehen einer Chipkarte oder beim Verlassen des Fahrzeugs wirksame akustische Anzeige vorgesehen werden, die den Fahrer an das Entnehmen der Mobilfunkeinrichtung erinnert.

Es ist weiterhin vorteilhaft, wenn die Mobilfunkeinrichtung, wenn sie im Audiosystem betrieben wird und elektrisch mit der Audioeinrichtung verbunden ist, wahlweise für einen Betrieb als Mobiltelefon oder zum Betrieb der Audioeinrichtung einstellbar ist. Durch dieses Trennung der Funktionen wird die Sprachverständlichkeit von entweder den akustischen Wiedergaben der Audioeinrichtung oder von Telefongesprächen deutlich verbessert, weil keine gegenseitige akustische Beeinflussung stattfindet.

Die genannte Aufgabe wird weiterhin durch eine Mobilfunkeinrichtung gemäß Patentanspruch 10 gelöst.

Diese zeichnet sich dadurch aus, dass sie als Mobiltelefon ausgebildet ist und dass die Bedienelemente des Mobiltelefons länglich ausgebildet sind und derart auf dem Mobiltelefon angeordnet sind, dass ihre Längsachsen einen Winkel von ca. + 45° oder - 45° zur Längsachse des Mobiltelefons bilden. Weiterhin ist es von Vorteil, wenn die Anzeigevorrichtung des Mobiltelefons auch ausgebildet ist, Informationen vorzugsweise um +90° oder um -90° gedreht gegenüber einer Standardausrichtung anzuzeigen. Beide Maßnahmen gewährleisten eine für den Benutzer bequeme Handhabung des Mobiltelefons, sei es bei horizontalem Einbau in die Frontblende der Audioeinrichtung, insbesondere in einem Fahrzeug, oder sei es bei vertikaler Haltung des Mobiltelefons bei Benutzung als Mobiltelefon.

Die genannte Aufgabe der Erfindung wird weiterhin auch durch eine Audioeinrichtung gemäß Patentanspruch 14 gelöst.

Es ist vorteilhaft, wenn die Lautsprecher der Audioeinrichtung ausgebildet sind, auch als Lautsprecher für die Mobilfunkeinrichtung zu fungieren, wenn dieses in dem Audiosystem als Mobiltelefon betrieben wird. Mit dieser Anordnung ist dann ein bidirektionaler Freisprechbetrieb möglich, insbesondere wenn zusätzlich noch die Leistung des Mikrofons im Mobiltelefon verstärkt wird oder wenn dieses durch ein weiteres Mikrofon ergänzt wird.

Schließlich wird die genannte Aufgabe auch durch die Frontblende für eine Audioeinrichtung gemäß Patentanspruch 20 gelöst. Sie zeichnet sich dadurch aus, dass sie ausgebildet ist, die Mobilfunkeinrichtung aufzunehmen. Dann, wenn die Mobilfunkeinrichtung eingebaut ist, repräsentieren dessen Anzeigeeinrichtung und dessen Bedienelemente die Anzeigeeinrichtung und die Bedienelemente der Frontblende. Auf der eigentlichen Frontblende brauchen dann nur noch jene Anzeige- und Bedienelemente für die Audioeinrichtung vorgesehen zu werden, die durch die Mobilfunkeinrichtung nicht realisiert werden können.

Vorteilhafterweise ist auch die Frontblende selber lösbar mit der Audioeinrichtung verbunden.

Weitere vorteilhafte Ausgestaltungen des Audiosystems, der Mobilfunkeinrichtung, der Audioeinrichtung und der Frontblende sind Gegenstand der Unteransprüche.

Die Erfindung wird nachfolgend in Form von vorteilhaften Ausgestaltungen anhand der beigefügten Figuren näher beschrieben, wobei:
- Fig. 1:: ein Audiosystem gemäß der Erfindung für einen Berieb mit lösbar eingebautem Mobiltelefon;
- Fig. 2:: das Audiosystem gemäß der Erfindung ohne eingebautes Mobiltelefon;
- Fig. 3:: ein Mobiltelefon gemäß der Erfindung, lösgelöst von dem Audiosystem, für reine Mobilfunkanwendungen; und
- Fig. 4:: ein Autoradio nach dem Stand der Technik
zeigt.

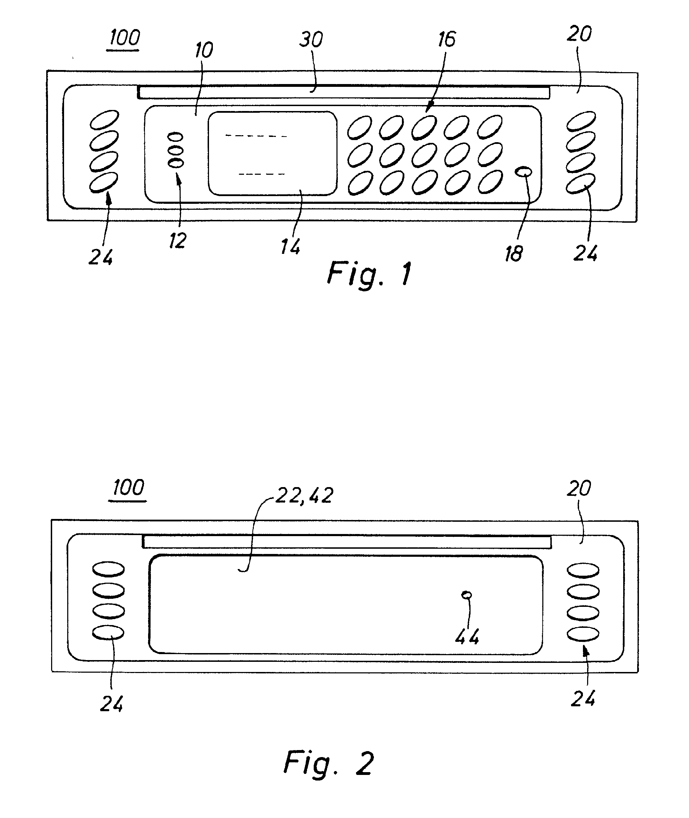

Fig. 1 zeigt ein Audiosystem 100, vorzugsweise für den Einbau in ein Fahrzeug, gemäß der Erfindung. Es umfaßt eine Audioeinrichtung, hier nicht gezeigt, eine Mobilfunkeinrichtung 10 und eine Frontblende 20 der Audioeinrichtung. Die Mobilfunkeinrichtung ist beispielhaft zusammen mit einer Anzeigeeinrichtung und/oder Bedienelementen als Mobiltelefon ausgebildet. Die Audioeinrichtung wird in Fig. 1 beispielhaft durch ein Kombinationsgerät, bestehend aus einem CD-Player und einem Radio repräsentiert. Von dem Radio sind nur dessen Bedienelemente 16, 24 und von dem CD-Player ist nur dessen CD-Schlitz 30 zu erkennen. Weil der CD-Player jedoch für die Darstellung des Erfindungsgedankens unbeachtlich ist, wird nachfolgend die Audioeinrichtung beispielhaft nur mit dem Radio gleichgesetzt.

Das Mobiltelefon 10 ist vorzugsweise horizontal in eine dafür vorgesehene Öffnung (Fig. 2: 22) der Frontblende 20 der Audioeinrichtung lösbar eingesteckt. Dabei schließt die in Fig. 1 gezeigte Vorderseite des Mobiltelefons vorzugsweise bündig mit der Vorderseite der Frontblende 20 ab. Sollte bei einem derartigen Einbau das Mobiltelefon 10 noch über die Rückseite der Frontblende überstehen, so ist in der Audioeinrichtung, auf welche die Frontblende 20 aufgesetzt ist, ebenfalls eine geeignete Öffnung, siehe Fig. 2: 42, zur Aufnahme des überstehenden Teils des Mobiltelefons vorzusehen.

Das Mobiltelefon 10 umfaßt einen Lautsprecher 12, eine Anzeigeeinrichtung 14, Bedienelemente 16 in Form einer Mobiltelefontastatur und ein Mikrofon 18.

Erfindungsgemäß ist das Mobiltelefon 10 mechanisch lösbar mit dem Audiosystem verbunden. Darüber hinaus ist es über hier nicht gezeigte Anschlüsse mit der Audioeinrichtung lösbar elektrisch verbunden und so ausgebildet, dass die Anzeigeeinrichtung 14 des Mobiltelefons auch als Anzeigeeinrichtung der Audioeinrichtung dienen kann und / oder dass die Bedienelemente 16 des Mobiltelefons auch zur Bedienung der Audioeinrichtung verwendet werden können.

Besteht die elektrische Verbindung zwischen dem Mobiltelefon 10 und der beispielsweise als Radio ausgebildeten Audioeinrichtung, so hat der Benutzer des Audiosystems 100 die Wahl, ob er über das Mobiltelefon mobil kommunizieren oder das Radio einstellen möchte. In letzterem Fall dient die Anzeigeeinrichtung 14 des Mobiltelefons zur Anzeige von Informationen den Rundfunkempfang betreffend. Ein Parallelbetrieb von Radiobetrieb und gleichzeitiger Mobilkommunikation kann zwar technisch vorgesehen werden; er wäre aber in der Praxis wenig sinnvoll wegen gegenseitiger akustischer Beeinträchtigung.

Fig. 1 zeigt weiterhin, dass die Frontblende 20 neben der Anzeigeeinrichtung 14 des Mobiltelefons 10 und dessen Bedienelementen auch noch eigene Bedienelemente 24 aufweist. Dabei handelt es sich vorzugsweise um Bedienelemente für Zusatzfunktionen der Audioeinrichtung, die keinen eigenständigen Betrieb der Audioeinrichtung erlauben und die von den Bedienelementen 16 des Mobiltelefons nicht abgedeckt werden.

Die Bedienelemente 24 können aus technischer Sicht problemlos so ausgebildet werden, dass über sie ein vollständiger Betrieb der Audioeinrichtung realisierbar ist; eine derartige Ausbildung ist allerdings dann nicht sinnvoll, wenn die Audioeinrichtung bei Entnahme des Mobiltelefons 10 aus dem Audiosystem, d.h. bei Unterbrechung der elektrischen Verbindung zwischen dem Mobiltelefon und der Audioeinrichtung, aus Gründen des Diebstahlschutzes deaktiviert bzw. unbrauchbar sein soll. Anders ausgedrückt: bei der Erfindung ist ein praktikabler und wirkungsvoller Diebstahlschutz für das Audiosystem dadurch möglich, dass das Mobiltelefon z.B. beim Verlassen des Fahrzeugs, in welches das Audiosystem eingebaut ist, einfach mitgenommen wird. Aus dem Stand der Technik sind Diebstahlschutzkonzepte für Autoradios bekannt, bei denen das Autoradio dadurch deaktiviert wird, dass die i.d.R. sperrige und als solche unbrauchbare Frontblende des Autoradios beim Verlassen des Fahrzeugs, in welches das Autoradio eingebaut ist, abgenommen und mitgenommen wird. Im Gegensatz dazu, entnimmt der Benutzer des Audiosystem der Erfindung beim Verlassen seines Fahrzeugs lediglich das Mobiltelefon aus dem Audiosystem; dadurch ist dann das zurückbleibende Audiosystem mit der Audioeinrichtung deaktiviert. Das Mobiltelefon kann er unterwegs in vorteilhafter Weise zur Mobilkommunikation nutzen.

Die fest im Fahrzeug eingebaute Antenne der Audioeinrichtung kann bei Bestehen der elektrischen Verbindung zwischen dem Mobiltelefon 10 und der Audioeinrichtung auch als Antenne des Mobiltelefons 10 dienen. Andererseits besteht aber auch die Möglichkeit, dass - bei Einbau des Audiosystems in ein Fahrzeug - die Fahrzeugantenne sowohl als Antenne für die Audioeinrichtung wie auch als Antenne für das Mobiltelefon bei Mobilfunkbetrieb im Fahrzeug dient.

Fig. 2 zeigt das Audiosystem 100 ohne eingebautes Mobiltelefon 10. In diesem Zustand ist das Audiosystem und insbesondere die Audioeinrichtung, d.h. das Radio, aufgrund der fehlenden elektrischen Verbindung zum Mobiltelefon funktionsuntüchtig. Es ist deutlich die leere Öffnung 22 in der Frontblende 20 und die dahinterliegende und vorzugsweise dazu fluchtende Öffnung 42 in der Audioeinrichtung zur Aufnahme des Mobiltelefons zu erkennen. Vorteilhafterweise weist die Audioeinrichtung ein Anzeigeelement 44 auf, um das Fehlen des Mobiltelefons in den Öffnungen optisch anzuzeigen.

Die Frontblende 20 selber ist vorzugsweise ebenfalls lösbar mit der Audioeinrichtung verbunden. Für die Beschreibung der Bedienelemente 24 der Audioeinrichtung auf der Frontblende 20 wird auf die obigen Ausführungen zu Fig. 1 verwiesen.

Fig. 3 zeigt schließlich ein Mobiltelefon 10 gemäß der Erfindung. Für die Beschreibung von dessen einzelnen Funktionselementen 12-18 sei ebenfalls auf die Beschreibung zu Fig. 1 verwiesen. Erwähnt seien hier besondere Ausführungsformen der Anzeigeeinrichtung 14 und der Bedienelemente 16.

Die Anzeigeeinrichtung 14 des Mobiltelefons 10 ist so ausgebildet, dass Informationen vorzugsweise um +90° oder um -90° gedreht gegenüber der in Fig. 3 dargestellten Standardausrichtung anzeigbar sind. Dies hat den Vorteil, dass die auf der Anzeigeeinrichtung 14 darzustellenden Informationen auch bei horizontalem Einbau des Mobiltelefons in die Frontblende 20 gemäß Fig. 1 für einen Betrachter richtig ausgerichtet und nicht gedreht erscheinen.

Die Bedienelemente des Mobiltelefons 10 sind vorzugsweise länglich, z.B. mit einem ellipsenförmigen Querschnitt, ausgebildet und derart auf dem Mobiltelefon angeordnet, dass ihre Längsachsen einen Winkel von ca. + 45° oder - 45° zur Längsachse des Mobiltelefons bilden. Dadurch wird gewährleistet, dass die Bedienelemente sowohl bei der in Fig. 3 gezeigten vertikalen Haltung des Mobiltelefons bei separater Nutzung zur Mobilkommunikation aber auch bei dem in Fig. 1 gezeigten horizontalen Einbau des Mobiltelefons in das Audiosystem ergonomisch zu bedienen sind.

Zur Verbesserung der Sende- und Empfangsleistung des Mobiltelefons kann ein zusätzlicher Leistungsverstärker vorgesehen sein.

Schließlich ist es vorteilhaft, dass der Akkumulator, hier nicht gezeigt, des Mobiltelefons bei Einbau des Audiosystems mit der Audioeinrichtung in ein Fahrzeug und bei Bestehen der elektrischen Verbindung zwischen der Audioeinrichtung und dem Mobilfunktelefon 10, über die Batterie des Fahrzeugs aufladbar ist.

## Patentansprüche

1. Audiosystem (100), vorzugsweise zum Einbau in ein Fahrzeug, umfassend
- eine Audioeinrichtung, insbesondere ein Radio;
- eine Mobilfunkeinrichtung (10);
- eine Anzeigeeinrichtung zur Anzeige von Informationen die Audioeinrichtung und / oder die Mobilfunkeinrichtung betreffend; und
- eine Mehrzahl von Bedienelementen zum Bedienen der Audioeinrichtung und/oder der Mobilfunkeinrichtung (10);
**dadurch gekennzeichnet, dass** die Mobilfunkeinrichtung (10) zusammen mit der Anzeigeeinrichtung und/oder den Bedienelementen aus dem Audiosystem entnehmbar ist.

2. Audiosystem nach Anspruch 1, **dadurch gekennzeichnet, dass** die entnehmbare Mobilfunkeinrichtung (10) zusammen mit der Anzeigeeinrichtung und/oder den Bedienelementen als Mobilfunktelefon ausgebildet ist.

3. Audiosystem nach Anspruch 2, **dadurch gekennzeichnet, dass** das Mobiltelefon (10) und die Audioeinrichtung elektrisch miteinander verbindbar und beide jeweils so ausgebildet sind, dass, im Falle des Bestehens einer solchen elektrischen Verbindung,
- die Anzeigeeinrichtung des Mobiltelefons (10) auch zur Anzeige von Informationen die Audioeinrichtung betreffend dienen kann; und/oder
- die Bedienelemente des Mobiltelefons zumindest teilweise auch zum Bedienen der Audioeinrichtung dienen können.

4. Audiosystem (100) nach einem der vorangegangenen Ansprüche, **dadurch gekennzeichnet, dass** zumindest Teile der Audioeinrichtung automatisch deaktiviert sind, sobald die elektrische Verbindung zwischen der Mobilfunkeinrichtung und der Audioeinrichtung unterbrochen ist.

5. Audiosystem (100) nach einem der vorangegangenen Ansprüche, **dadurch gekennzeichnet, dass** die Audioeinrichtung eine Frontblende (20) mit einer Öffnung (22) zur Aufnahme der Mobilfunkeinrichtung (10) aufweist.

6. Audiosystem (100) nach Anspruch 5, **dadurch gekennzeichnet, dass** die Audioeinrichtung ebenfalls eine Öffnung (42) aufweist zur Aufnahme der Mobilfunkeinrichtung soweit diese über die Rückseite der Frontblende (20) übersteht.

7. Audiosystem (100) nach Anspruch 5 oder 6, **dadurch gekennzeichnet, dass** diejenigen Bedienelemente des Audiosystems, die nicht durch die Bedienelemente der als Mobiltelefon ausgebildeten Mobilfunkeinrichtung (10) repräsentiert werden, auf der Frontblende (20) angeordnet sind.

8. Audiosystem (100) nach Anspruch 7, **dadurch gekennzeichnet, dass** die Audioeinrichtung ein optisches Anzeigeelement (44) aufweist zur Anzeige, ob die Mobilfunkeinrichtung (10) in die Öffnung (42) der Audioeinrichtung eingesetzt ist oder nicht.

9. Audiosystem (100) nach einem der vorangegangen Ansprüche, **dadurch gekennzeichnet, dass** - wenn die Mobilfunkeinrichtung (10) elektrisch mit dem Audiosystem (100) verbunden ist - die der Mobilfunkeinrichtung zugeordnete Anzeigeeinrichtung und die zugeordneten Bedienelemente(10) wahlweise entweder nur zur Anzeige und Bedienung von Funktionen die mobile Kommunikation (10) betreffend oder nur zur Anzeige und Bedienung von Funktonen die Audioeinrichtung betreffend einstellbar ist.

10. Mobilfunkeinrichtung (10) geeignet zur Verwendung in einem Audiosystem (100) nach einem der Ansprüche 1 bis 9, **dadurch gekennzeichnet, dass** die Mobilfunkeinrichtung (10) als Mobiltelefon ausgebildet ist und dass die Bedienelemente (16) des Mobiltelefons (10) länglich ausgebildet sind und derart auf dem Mobiltelefon (10) angeordnet sind, dass ihre Längsachsen einen Winkel von ca. +/- 45° zur Längsachse des Mobiltelefons (10) bilden.

11. Mobilfunkeinrichtung (10) nach Anspruch 10, **dadurch gekennzeichnet, dass** die Anzeigeeinrichtung (14) des Mobiltelefons (10) ausgebildet ist, Informationen vorzugsweise um +90° oder um -90° gedreht gegenüber einer Standardausrichtung anzuzeigen.

12. Mobilfunkeinrichtung (10) nach Anspruch 10 oder 11, **dadurch gekennzeichnet, dass** der Akkumulator des Mobiltelefons (10) bei Einbau der Audioeinrichtung in ein Fahrzeug und bei Bestehen der elektrischen Verbindung zwischen der Audioeinrichtung und dem Mobiltelefon, über die Batterie des Fahrzeugs aufladbar ist.

13. Mobilfunkeinrichtung (10) nach einem der Ansprüche 10 bis 12, **dadurch gekennzeichnet, dass** die Antenne der Audioeinrichtung bei Bestehen der elektrischen Verbindung zwischen dem Mobiltelefon (10) und der Audioeinrichtung auch als Antenne für das Mobiltelefon (10) dient.

14. Audioeinrichtung geeignet zur Verwendung in einem Audiosystem (100) nach einem der Ansprüche 1 bis 9, **dadurch gekennzeichnet, dass** die Audioeinrichtung einen Anschluss für eine lösbare elektrische Verbindung mit der als Mobiltelefon ausgebildeten Mobilfunkeinrichtung (10) aufweist und derart ausgebildet ist, dass - im Falle des Bestehens der elektrischen Verbindung -
- die Anzeigeeinrichtung der Audioeinrichtung durch die Anzeigeeinrichtung (14) des Mobiltelefons (10) repräsentiert wird; und / oder
- die Bedienelemente der Audioeinrichtung zumindest teilweise durch die Bedienelemente (16) des Mobiltelefons (10) repräsentiert werden.

15. Audioeinrichtung nach Anspruch 14, **dadurch gekennzeichnet, dass** die Lautsprecher der Audioeinrichtung ausgebildet sind, auch als Lautsprecher für das Mobiltelefon (10) zu fungieren.

16. Audioeinrichtung nach einem der Ansprüche 13 bis 15, **dadurch gekennzeichnet, dass** die Audioeinrichtung eine Frontblende (20) mit einer Öffnung (22) zur Aufnahme des Mobiltelefons (10) aufweist.

17. Audioeinrichtung nach Anspruch 16, **dadurch gekennzeichnet, dass** auch die Audioeinrichtung eine Öffnung (42) aufweist zur Aufnahme des Mobiltelefons (10) soweit dieses über die Rückseite der Frontblende (20) übersteht.

18. Audioeinrichtung nach Anspruch 16 oder 17, **dadurch gekennzeichnet, dass** diejenigen Bedienelemente (24) der Audioeinrichtung, die nicht durch die Bedienelemente des Mobiltelefons (10) repräsentiert werden, auf der Frontblende (20) angeordnet sind.

19. Audioeinrichtung nach einem der Ansprüche 16 bis 18, **dadurch gekennzeichnet, dass** die Audioeinrichtung ein optisches Anzeigeelement (44) aufweist zur Anzeige, ob das Mobiltelefon (10) in die Öffnung der Audioeinrichtung eingesetzt ist oder nicht.

20. Frontblende (20) für eine Audioeinrichtung, insbesondere für ein Autoradio, wobei die Audioeinrichtung mit einer Mobilfunkeinrichtung (10) zusammenwirkt, **dadurch gekennzeichnet, dass** die Frontblende (20) eine Öffnung (22) zur lösbaren Aufnahme der Mobilfunkeinrichtung (10) aufweist.

21. Frontblende nach Anspruch 20, **dadurch gekennzeichnet, dass** die als Mobiltelefon ausgebildete Mobilfunkeinrichtung und die Audioeinrichtung lösbar elektrisch miteinander verbindbar und jeweils derart ausgebildet sind, dass
- die Anzeigeeinrichtung der Frontblende (20) durch die Anzeigeeinrichtung (14) des Mobiltelefons (10) repräsentiert wird; und /oder
- zumindest ein Teil der Bedienelemente der Frontblende (20) durch die Bedienelemente (16) des Mobiltelefons (10) repräsentieren werden.

22. Frontblende (20) nach Anspruch 20 oder 21, **dadurch gekennzeichnet, dass** die Frontblende (20) selber lösbar mit der Audioeinrichtung verbunden ist.
